Europäisches Patentamt

European Patent Office

Office européen des brevets

(11) Publication number: **0 358 629 B1**

(12) **EUROPEAN PATENT SPECIFICATION**

(45) Date of publication of patent specification: **22.12.93**   (51) Int. Cl.5: **A01G  31/00**

(21) Application number: **89870126.3**

(22) Date of filing: **22.08.89**

(54) **A method for feeding plants by hydroponic cultivation.**

(30) Priority: **23.08.88 BE 8800958**
**01.12.88 NL 8802964**

(43) Date of publication of application:
**14.03.90 Bulletin  90/11**

(45) Publication of the grant of the patent:
**22.12.93 Bulletin  93/51**

(84) Designated Contracting States:
**BE DE FR GB**

(56) References cited:
**EP-A- 0 015 103        WO-A-86/00494**
**DE-A- 2 602 759        DE-A- 3 331 818**
**GB-A- 1 318 698        NL-A- 8 401 261**

(73) Proprietor: **EPENHUYSEN CHEMIE N.V.**
**Noordweg 3**
**NL-3336 LH Zwijndrecht(NL)**

(72) Inventor: **The inventor has agreed to waive**
**his entitlement to designation**

(74) Representative: **Callewaert, Jean et al**
**Bureau Gevers S.A.**
**rue de Livourne 7**
**bte 1**
**B-1050 Bruxelles (BE)**

Rank Xerox (UK) Business Services
(3. 10/3.6/3.3. 1)

## Description

The invention relates to a method for feeding a plant, in particular by hydroponic cultivation, according to the preamble of claim 1.

In a hydroponic system, plants are cultured in a film of recirculating nutrient solution or on a neutral material which, as such, does not contain natural nutrient elements but which retains capillary water and which allows the roots of the plants to develop. The nutrient elements are supplied to the plant as an aqueous nutrient solution, for example through an irrigation system. The nutrient solution contains the nutrient elements nitrogen, phosphorus, sulphur, potassium, calcium and magnesium under ion form. These nutrient elements are supplied to the plant in a very low concentration.

In practice, use is generally made of two separated containers wherein the cultivator prepares a hundred times concentrated solution of the necessary nutrient elements. The composition of the nutrient solution to be supplied to the plant, and consequently also the composition of the concentrated solutions in both containers, is determined by taking into account the plant to be cultivated and the quality of the used water. Before supplying the concentrated solutions to the plant, these solutions are diluted in water in order to obtain said aqueous nutrient solution containing the nutrient elements in a low concentration adapted to a predetermined nutrient requirement of the plant.

In order to prepare the two concentrated nutrient solutions, the cultivator uses in practice generally solid substances which he dissolves in water. However, since these solid substances always contain a small percentage of insoluble material, the problem arises that these insoluble materials may block the conducts leading to the individual plants. Indeed, these conducts have a very narrow outlet since they have to supply the nutrient solution in small quantities, more particularly droplet by droplet, to the individual plants.

In order to solve this problem, NL-A-8401261 proposes to use concentrated solutions of known solid substances and to remove the insoluble substances from these concentrated solutions, for example by filtration, prior to composing the aqueous nutrient solution for the plant. In the method disclosed in NL-A-8401261, use is made of seven concentrated solutions for preparing the aqueous nutrient solution. These seven concentrated solutions contain, respectively, calcium nitrate and ammonium nitrate ; magnesium nitrate ; potassium nitrate and nitric acid ; potassium bisulphate ; dipotassium phosphate ; ammonium nitrate ; and potassium carbonate. In addition to these seven concentrated solutions, there has to be provided a separate nitric acid or phosphoric acid solution , and under given circumstances also an alkaline solution, for controlling the pH of the diluted nutrient solution. A further drawback of the method according to NL-A-8401261 is that the variety of different nutrient solution compositions which can be realized with the seven concentrated solutions of NL-A-8401261 is rather limited, as it appears for example from page 7, lines 8 to 9. These lines indicate, more particularly, that a somewhat modified set of concentrated solutions is required when using this nutrient system for soil cultures.

An object of the present invention is to provide a method for feeding plants which allows to realize a larger number of different mutual combinations of the nutrient elements in the nutrient solution while using only seven different concentrated solutions.

To this end, a method according to the invention is characterized in that use is made as the fifth to the seventh concentrated solutions respectively of a concentrated solution of sulphuric acid, phosphoric acid and potassium hydroxide.

Each of the concentrated solutions of the method according to the invention contains only one of the seven substances. These seven concentrated solutions provide a larger degree of freedom for composing different nutrient solutions than the concentrated solutions of the method according to NL-A-8401261. This is also due to the fact that the method according to the invention is a so-called "single nutrient system" wherein the following nutrients for the plant : $H_2PO_4^-$, $SO_4^{2-}$, $NH_4^+$, $Ca^{2+}$, $K^+$ and $Mg^{2+}$ comes each from one concentrated fertilizer solution. This feature, in combination with a neutralization reaction for the elements $K^+$, $H_2PO_4^-$, $SO_4^{2-}$ and $NO_3^-$, gives flexibility to the system for composing different nutrient solutions for the plant. In the method according to the present invention, each of the $NH_4^+$, $Ca^{2+}$ and $Mg^{2+}$ fertilizer solutions supply nitrate in the nutrient solution in an amount equal to the sum of the $NH_4^+$ content and twice the $Ca^{2+}$ and $Mg^{2+}$ content. This amount of nitrate is not too high since all recipes for plants require a high nitrate content. When the plants require a nitrate amount which is larger than the amount of nitrate supplied by the $NH_4^+$, $Ca^2$ and $Mg^{2+}$ fertilizer solutions, $HNO_3$ is added in combination with KOH to neutralize this nitric acid.

In contrast to the method according to the present invention, three nutrient elements, more particularly $NO_3^-$, $NH_4^+$ and $K^+$ are each supplied in the method according the NL-A-8401261 by more than one concentrated solution (see Table E of NL-A-8401261). Further, the $Ca(NO_3)_2$ solution contains not only $Ca^{2+}$ and $NO_3^-$ but also $NH_4^+$. All this causes the flexibility of this known method to be smaller than the flexibility

2

of the method according to the invention, and this is also due to the fact that the mutual combinations between the $KNO_3$ and $K_2HPO_4$ solutions cannot be choosen freely since the $KNO_3$ and the $KHSO_4$ solutions are acid components whereas the $K_2HPO_4$ solution is an alkaline component. On the contrary, in the method according to the present invention, the combination between the $HNO_3$, $H_2SO_4$ and $H_3PO_4$ solutions is completely free since all of these acid solutions are neutralized by the KOH solution.

The invention also relates to the use of the concentrated solutions as a combined set, in the method according to claim 1 or 2.

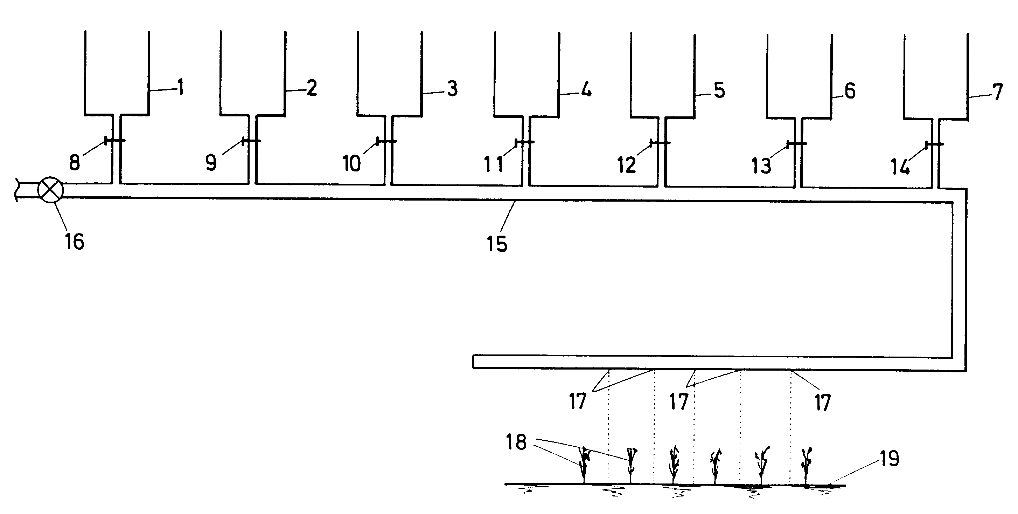

The invention will now be described further by means of an example and with reference to the drawing wherein the sole figure shows an example of a device for performing a method according to the invention.

By hydroponic cultivation the nutrients for the plants to be cultivated are supplied as an aqueous solution to the plant. The nutrient supplied to the plant always comprises nitrogen (N), phosphorus ($H_2PO_4^-$), sulphur ($SO_4^{2-}$), potassium ($K^+$), calcium ($Ca^{2+}$) and magnesium ($Mg^{2+}$) ions.

For each plant there is determined a feeding scheme wherein the concentration of each of said ions is predetermined. That feeding scheme is for example prepared by "Tuinbouwproefstation Naaldwijk" (The Netherlands) and distributed to the cultivators.

For composing that nutrient there is started from a number of substances which are each time available as a concentrated solution. Those substances are for example potassium hydroxide (KOH), nitric acid ($HNO_3$), phosphoric acid ($H_3PO_4$), sulphuric acid ($H_2SO_4$), ammonium nitrate ($NH_4NO_3$), magnesium nitrate $Mg(NO_3)_2$ and calcium nitrate $Ca(NO_3)_2$. The KOH comprises $K^+$ ions, while the $HNO_3$ respectively $H_3PO_4$ and $H_2SO_4$, $NO_3^-$, $H_2PO_4^-$ and $SO_4^{2-}$ comprises ions which are necessary ions for the nutrient of a plant. In fact, those substances can be decomposed as follows :

$$KOH \leftrightarrows K^+ + OH^-$$
$$HNO_3 \leftrightarrows H^+ + NO_3^-$$
$$H_3PO_4 \leftrightarrows H^+ + H_2PO_4^-$$
$$NH_4NO_3 \leftrightarrows NH_4 + NO_3^-$$
$$Ca(NO_3)_2 \leftrightarrows Ca^{2+} + 2NO_3^-$$
$$Mg(NO_3)_2 \leftrightarrows Mg^{2+} + 2NO_3^-$$

Starting from those substances all necessary ions for feeding the plant can be obtained, i.e. $K^+$, $NO_3^-$, $H_2PO_4^-$, $SO_4^{2-}$, $NH_4^+$, $Ca^{2+}$ and $Mg^{2+}$.

In a container there is always a concentrated solution of the concerned substance present. The container is used as reactor, i.e. for a neutralisation reaction with the components.

Due to the fact that the substances are now present either as a caustic or an acid and in a concentrated solution, the neutralisation occurs in a diluted state in such a manner that when those components are mixed together in the conduct there will be no precipitation. The acids and the caustics are the most elementary possibilities for forming the nutrients.

The nutrients can be composed in a flexible concentration, due to the fact that the concentrated solution supplied to the cultivators is still of such a concentration that a neutralisation reaction can occur without generating heat.

The nature is however such that the plants need a relatively large amount of nitrate ($NO_3^-$) ions for their nutrition. From an economical point of view it is then more advantageous to use very "rich" nitrate solutions, i.e. magnesium as magnesium nitrate, ammonium as ammonium nitrate and calcium as calcium nitrate. The fact that the neutralisation reaction is then not realized with respect to the $NH_4^+$, $Mg^{2+}$ and $Ca^{2+}$ does not infringe the above mentioned principle.

In practice, there is started from seven raw materials wherein the nutrients are present as a solution. The seven raw materials are divided into three groups :

1. ACIDS :

- Nitric acid $HNO_3$
  $[H^+ + NO_3^-)$ (Salacid)
- Sulphuric acid $H_2SO_4$
  $[2H^+ + SO_4^{2-})$ (Sulfacid)
- Phosphoric acid $H_3PO_4$
  $[H^+ + H_2PO_4^-]$ (Fosacid)

2. BASE :

- Potassium hydroxide KOH
  [$K^+$ + $OH^-$] (Kalibase)

3. Neutral solutions :

- Calcium nitrate $Ca(NO_3)_2$
  [$Ca^{2+}$ + $2NO_3^-$] (Calnit)
- Magnesium nitrate $Mg(NO_3)_2$
  [$Mg^{2+}$ + $2NO_3^-$] (Magnesit)
- Ammonium nitrate ($NH_4NO_3$)
  [$NH_4^+$ + $NO_3^-$] (Ammonit)

All those raw materials are mentioned in Table I. For each of those raw materials there is mentioned the content (in %) in an aqueous solution, the cristallisation point, the nutrients in % by weight and in mol/kg. For the acids and the base the acid/base input is also mentioned.

The concentrations of acids and base are so determined that for each arbitrary nutrition scheme there is a balance between the acid ($H^+$) and the base ($OH^-$) input in mmol/l in the final nutrient liquid.

The gist of the method according to the invention is that there is no excess of $H^+$ and $OH^-$ ions present in the irrigation system, through which a neutralisation reaction has thus occured.

The mentioned raw materials are selected for a number of reasons given hereafter.

Nitric acid, phosphoric acid, sulphuric acid and potassium hydroxide :
- those substances are chemically pure products, and comprise only a minor amount of polluents ;
- those substances do not comprise unsoluble particles, and thus do not block the irrigation system ;
- those substances comprise single nutrients, give more possibilities to obtain the correct composition of the nutrient scheme ;
- the concentrations of nutrients are as high as possible, without violating the neutralisation principle ;
- also at low temperatures those substances remain liquid and clear (cristallisation point below 0°C).

Calcium nitrate, magnesium nitrate and ammonium nitrate solutions :

These are neutral solutions which do not comprise $H^+$ or $OH^-$ ions, and have thus no influence on the neutralisation principle of the invention. Those solutions are clear and free of insoluble particles, and only comprise a minor amount of polluents. The choice of nitrate solutions have several backgrounds :
- the need of nitrate of plants is high ;
- the solubility of nitrate salt is very high ;
- the concentration of active substance is high.

In the figure seven containers 1 to 7 are illustrated. Each container is connected with a conduct 15 by means of a respective valve 8-14. The water supply is connected by means of a valve 16 to the conduct 15 which leads toward the plants to be fed. The valves can be manipulated either by hand or by means of a computer in which memory there can be stored control programmes for feeding one or more plants. The water conduct 15 leads towards a series of injectors 17 which are situated above or in the substratum 19 in which the plants 18 are cultivated.

It is also possible when already two containers (known method) are present by the cultivators, to use those containers for a concentrated solution of the above mentioned substances.

Starting from those substances it is now possible to prepare the appropriate nutrient for each plant. The Tables II and III illustrate a nutrition scheme for strawberries in recirculated water, respectively anemone in rockwool. In the uppermost row of each table the ions are mentioned and in the first column the different basis substances are mentioned. The second row indicates the values (in mmol/l) of the ion concentrations for the respective plant. For example, for stawberries in recirculated water 10 mmol/l $NO_3^-$, 1.25 mmol/l $H_2PO_4^-$, 1.125 mmol/l $SO_4^{2-}$, 0,5 mmol/l $NH_4^+$, 5.25 mmol/l $K^+$, 2.75 mmol/l $Ca^{2+}$ and 1.25 mmol/l $Mg^{2+}$ of ion concentration is necessary. Those values are known on their own and are distributed to the cultivators by their association. The last two columns indicate the $OH^-$ respectively the $H^+$ ions.

By using the matrix shown in the table, the concentrations of the different substances can now easily be calculated. In the example of strawberries in recirculated water, the above mentioned ion concentrations are given in the second raw of Table II. In order to realize the neutralisation reaction the concentration $OH^-$ and $H^+$ ions have to be equal. The $OH^-$ ions can only be supplied by KOH. Because for strawberries there has to be a concentration of 5.25 mmol/l of $K^+$ ions there will thus also be a concentration of 5.25 mmol/l of $OH^-$ ions. That number is indicated in the concerned case. Because there are 5.25 mmol/l on $OH^-$ ions, 5.25 mmol/l of $H^+$ ions will be necessary for the equilibrium (neutralisation principle).

4

The $H_2PO_4^-$ ions can only be supplied by the phosphoric acid, which implies that there is 1.25 mmol/l phosphoric acid needed. This gives then 1.25 mmol $H^+$ ions pro liter. A same reasoning is valid for the respective $SO_4^{2-}$, $NH_4^+$, $Ca^{2+}$ and $Mg^{2+}$ ions which can only be supplied by respectively the sulphuric acid, ammonium nitrate, calcium nitrate and magnesium nitrate. In the matrix those concentrations are written in their respective cases.

Now it is still necessary to determine the amount of nitrate. For that purpose there is operated as given hereunder. Due to the fact that there are $2NO_3^-$ ions for one $Ca^{2+}$ ion when use is made of calcium nitrate and that 2.75 mmol/l of calcium nitrate are necessary for the $Ca^{2+}$ concentration, there has to be 2 x 2.75 = 5.5 mmol/l nitrate for a supply of $NO_3^-$ ions, 1 mmol/l calcium nitrate gives, solved in water, 1 mmol/l calcium and 2 mmol/l nitrate. Analogously there are $2NO_3^-$ ions for 1 $Mg^{2+}$ ion. 1.125 mmol/l magnesium nitrate is needed and that gives then 2.25 mmol/l nitrate. By ammonium nitrate there is one $NO_3^-$ ion for one $NH_4^+$ ion so that 0.5 mmol/l ammonium nitrate is added. All this gives already 5.25 + 2.25 + 0.5 = 8.25 mmol/l concentration of $NO_3^-$ ions. This however is not enough because strawberries need 10 mmol/l $NO_3^-$. The remaining amount, i.e. 10 - 8.25 = 1.75 mmol/l has thus to be supplied by the nitric acid. All those values are represented in the $NO_3^-$ column of Table II.

There can now be checked if this matrix is correct. Therefore the last two columns are used. As already mentioned the 5.25 mmol/l of $OH^-$ ions can only be supplied by the potassium hydroxide so that this number can be written down as such.

The $H^+$ ions originate from the sulphuric acid, the nitric acid and the phosphoric acid. Sulphuric acid supplies 2 x 1.125 = 2.25 mmol/l, nitric acid supplies 1.75 mmol/l and phosphoric acid supplies 1.25 mmol/l as already determined. Those three numbers added give : 2.25 + 1.75 + 1.25 5.25 mmol/l, i.e. the required concentration of $H^+$ ions.

Table III is given for illustration purpose and gives an analogous operation for anemone on rockwool. Also in Table III there can be seen how by using the matrix, the different concentrations can easily be determined.

In order to convert the number in mmol/l of the product into an amount in kg of the hundred times concentrated solutions, when use is made of the two known containers, the following formula can be used :

$$0.1 \times K \times m \times \frac{100}{L} = \text{kg product/m}^3$$

wherein

K = the number of mmol/l of the product
m = the molecular mass of the product
L = the percentage by weight of the product

In table II, 1.25 mmol/l $H_3PO_4$ are needed, i.e. converted

$$0.1 \times 1.25 \times 98 \times \frac{100}{59} = 20.76 \text{ kg}$$

phosphoric acid 59 % pro 1000 l solution.

In an analogous way the remaining quantities are determined and supplied to the two containers.

Starting from the above mentioned seven substances, a nutrient for whatever plant to be cultivated can be composed. With that limited number a nutrition scheme can also be made which is flexible in time, because the ion concentrations in the nutrient can vary and can thus be adapted according the growing phase of the plant. Because every arbitrary ion concentration can be obtained by using a method according to the invention, it is thus also possible for a specific plant to vary that concentration in the time.

The used substances are available in very pure solutions for those simple acids and caustics (99 % purity), which gives a very high purity of the nutrient supplied to the plant. Further the use of seven raw materials has the advantage that the number of used products remains limited.

Due to the fact that all those substances can be solved in water and due to the fact the ion concentrations of the water can vary from place to place, it is usual to control the final concentration of the nutrient in the waters in a usual way. In function of the measured value it is then possible to apply eventual corrections to the concentration.

5

EP 0 358 629 B1

## TABLE I

| PRODUCT | CONTENT% | CRISTALLISA-TION POINT | NUTRIENTS % BY WEIGHT | | NUTRIENTS IN MOL/kg | | ACID/BASE INPUT |
|---|---|---|---|---|---|---|---|
| Nitric acid | 38 | $-33°C$ | N (nitrate) | 8.4 | 6 mol/kg $NO_3^-$ | | 6 mol/kg $H^+$ |
| Sulphuric acid | 59 | $-38°C$ | $SO_3$ | 48.1 | 6 mol/kg $SO_4^{2-}$ | | 12 mol/kg $H^+$ |
| Phosphoric acid | 59 | $-18°C$ | $P_2O_5$ | 45.7 | 6 mol/kg $H_2PO_4^-$ | | 6 mol/kg $H^+$ |
| Potassium hydroxide | 33 | $-50°C$ | $K_2O$ | 27.9 | 6 mol/kg $K^+$ | | 6 mol/kg $OH^-$ |
| Calcium nitrate | 52 | $+4°C$ | N (nitrate) | 8.8 | 3.2 mol/kg $Ca^{2+}$ | | - |
| | | | Ca.O | 17.7 | 6.4 mol/kg $NO_3^-$ | | - |
| Magnesium nitrate | 37 | $-14°C$ | N (nitrate) | 7 | 5 mol/kg $NO_3^-$ | | - |
| | | | MgO | 10 | 2.5 mol/kg $Mg^{2+}$ | | - |
| Ammonium nitrate | 52 | $+2°C$ | N (nitrate) | 9 | 6.2 mol/kg $NH_4^+$ | | - |
| | | | N (ammonium) | 9 | 6.2 mol/kg $NO_3^-$ | | - |

## TABLE II

| PLANT : STRAWBERRY in recirculated water | | | | | | | | | | | | | |
|---|---|---|---|---|---|---|---|---|---|---|---|---|---|
| | | $NO_3^-$ | $H_2PO_4^-$ | $SO_4^{2-}$ | $NH_4^+$ | $K^+$ | $Ca^{2+}$ | $Mg^{2+}$ | | | | $OH^-$ | $H^+$ |
| | | COMPOSITION TO BE CALCULATED  mmol/l | | | | | | | | | | | |
| FERTILIZER | mmol/l | 10 | 1.25 | 1.125 | 0.5 | 5.25 | 2.75 | 1.125 | | | | 5.25 | 5.25 |
| PHOSPHORIC ACID $H^+ + H_2PO_4^-$ | | | 1.25 | | | | | | | | | | 1.25 |
| NITRIC ACID $H^+ + NO_3^-$ | | 1.75 | | | | | | | | | | | 1.75 |
| AMMONIUM NITRATE ($NH_4^+ + NO_3^-$) | | 0.5 | | | 0.5 | | | | | | | | |
| MAGNESIUM NITRATE ($Mg^{2+} + 2NO_3^-$) | | 2.25 | | | | | | 1.125 | | | | | |
| POTASSIUM HYDROXIDE ($K^+ + OH^-$) | | | | | | 5.25 | | | | | | 5.25 | |
| CALCIUM NITRATE ($Ca^{2+} + 2NO_3^-$) | | 5.5 | | | | | 2.75 | | | | | | |
| SULPHURIC ACID ($2H^+ + SO_4^{2-}$) | | | | 1.125 | | | | | | | | | 2.25 |
| | | | | | | | | | | | | | |

EP 0 358 629 B1

## TABLE III

PLANT : Anemone in rockwool

COMPOSITION TO BE CALCULATED mmol/l

| FERTILIZER (mmol/l) | $NO_3^-$ | $H_2PO_4^-$ | $SO_4^{2-}$ | $NH_4^+$ | $K^+$ | $Ca^{2+}$ | $Mg^{2+}$ | $OH^-$ | $H^+$ |
|---|---|---|---|---|---|---|---|---|---|
| COMPOSITION TO BE CALCULATED | 13.0 | 1.5 | 1.25 | 0.5 | 6.5 | 4.0 | 1 | 6.5 | 6.5 |
| PHOSPHORIC ACID ($H^+ + H_2PO_4^-$) | | 1.5 | | | | | | | 1.5 |
| NITRIC ACID ($H^+ + NO_3^-$) | 2.5 | | | | | | | | 2.5 |
| AMMONIUM NITRATE ($NH_4^+ + NO_3^-$) | 0.5 | | | 0.5 | | | | | |
| MAGNESIUM NITRATE ($Mg^{2+} + 2NO_3^-$) | 2 | | | | | | 1 | | |
| POTASSIUM HYDROXIDE ($K^+ + OH^-$) | | | | | 6.5 | | | 6.5 | |
| CALCIUM NITRATE ($Ca^{2+} + 2NO_3^-$) | 8 | | | | | 4.0 | | | |
| SULPHURIC ACID ($2H^+ + SO_4^{2-}$) | | | 1.25 | | | | | | 2.5 |

## Claims

1. A method for feeding a plant, in particular by hydroponic cultivation, wherein an agueous nutrient solution containing the nutrient elements nitrogen, phosphorus, sulphur, potassium, calcium and magnesium is prepared and supplied to said plant, and wherein for preparing said nutrient solution, use is made of a set of seven main concentrated solutions containing said nutrients elements, which solutions are admixed to water in amounts adapted to a predetermined nutrient requirement of the plant, said seven main concentrated solutions comprising a first upto a seventh concentrated solution respectively of calcium nitrate, magnesium nitrate, ammonium nitrate, nitric acid, a sulphate compound, a phosphate compound and an alkaline potassium compound, characterized in that use is made as said fifth to said seventh concentrated solutions respectively of a concentrated solution of sulphuric acid, phosphoric acid and potassium hydroxide.

**2.** A method according to claim 1, characterized in that said concentrated solutions are each separately dosed into a water conduit leading to said plant.

**3.** Use of concentrated solutions respectively of phosphoric acid ($H_3PO_4$), nitric acid ($HNO_3$), ammonium nitrate ($NH_4NO_3$), magnesium nitrate ($Mg(NO_3)_2$), potassium hydroxide (KOH), calcium nitrate ($Ca(NO_3)_2$) and sulphuric acid ($H_2SO_4$) as a combined set, in a method according to either one of the claims 1 to 2, in particular for preparing an aqueous nutrient solution for feeding plants in a hydroponic system.

**Patentansprüche**

**1.** Nahrungsverfahren für eine Pflanze, insbesondere in Hydrokultur, bei dem eine wäßrige Nährlösung, die die Nährelemente Stickstoff, Phosphor, Schwefel, Kalium, Calcium und Magnesium enthält, bereitstellt und der Pfanze zugeführt wird, und bei dem ein Satz von sieben konzentrierten Hauptlösungen benutzt wird, welche die Nährelemente enthalten, wobei die Lösungen zu Wasser in Mengen beigemischt werden, die einem vorbestimmten Nährerfordernis der Pflanze angepaßt sind, und wobei die sieben konzentrierten Hauptlösungen aus einer ersten bis zu einer siebten konzentrierten Lösung jeweils aus Calciumnicrat, Magnesiumnitrat, Ammoniumnitrat, Salpetersäure, einer Sulfatverbindung, einer Phospatverbindung und einer alkalischen Kaliumverbindung bestehen,
dadurch gekennzeichnet,
daß als fünfte bis siebte konzentrierten Lösung jeweils eine konzentrierte Lösung von Schwefelsäure, Phosphorsäure und Kaliumhydroxid benutzt wird.

**2.** Verfahren nach Anspruch 1, dadurch gekennzeichnet, daß die konzentrierten Lösungen jeweils getrennt in eine zu der Pflanze führende Wasserleitung dosiert werden.

**3.** Verwendung von konzentrierten Lösungen jeweils aus Phosphorsäure ($H_3PO_4$), Salpetersäure ($HNO_3$), Ammoniumnitrat ($NH_4NO_3$), Magnesiumnitrat ($Mg(NO_3)_2$), Kaliumhydroxid (KOH), Calciumnitrat ($Ca(NO_3)_2$) und Schwefelsäure ($H_2SO_4$) als ein kombinierter Satz bei einem Verfahren nach jedem der beiden Ansprüche 1 oder 2, insbesondere zum Bereitstellen einer wäßrigen Nährlösung für Pflanzennahrung in einem Hydrosystem.

**Revendications**

**1.** Procédé de nutrition d'une plante, en particulier par culture hydroponique, dans lequel une solution nutritive aqueuse contenant les éléments nutritifs azote, phosphore, soufre, potassium, calcium et magnésium est préparée et distribuée à ladite plante, et dans lequel pour la préparation de ladite solution nutritive, utilisation est faite d'une série de sept solutions concentrées principales contenant lesdits éléments nutritifs, lesquelles solutions sont mélangées à de l'eau en quantités adaptées à une demande nutritive prédéterminée de la plante, ces sept solutions concentrées principales comprenant une première à une septième solution concentrée respectivement de nitrate de calcium, de nitrate de magnésium, de nitrate d'ammonium, d'acide nitrique, d'un composé de sulfate, d'un composé de phosphate et d'un composé de potassium alcalin, caractérisé en ce que utilisation est faite comme cinquième à septième solutions concentrées respectivement d'une solution concentrée d'acide sulfurique, d'acide phosphorique et d'hydroxyde de potassium.

**2.** Procédé suivant la revendication 1, caractérisé en ce que les solutions concentrées sont chacune dosées séparément dans un conduit d'eau menant à la plante.

**3.** Utilisation de solutions concentrées respectivement d'acide phosphorique ($H_3PO_4$), d'acide nitrique ($HNO_3$), de nitrate d'ammonium ($NH_4NO_3$), de nitrate de magnésium [$Mg(NO_3)_2$], d'hydroxyde de potassium (KOH), de nitrate de calcium [$Ca(NO_3)_2$] et d'acide sulfurique ($H_2SO_4$) sous la forme d'une série combinée, dans un procédé suivant l'une ou l'autre des revendications 1 et 2, en particulier pour la préparation d'une solution nutritive aqueuse pour la nutrition de plantes dans un système hydroponique.